# FASCICULE DE BREVET EUROPEEN

(11) **EP 4 359 650 B1**
(45) Date de publication et mention de la délivrance du brevet: **06.08.2025**
(21) Numéro de dépôt: 22741351.5
(22) Date de dépôt: 20.06.2022
(51) Int. Cl.: F01D 5/28, F01D 5/30, F01D 17/16

(54) **ROUE DE MODULE DE SOUFFLANTE, ET TURBOREACTEUR EQUIPE D'UNE TELLE ROUE**
GEBLÄSEMODULLAUFRAD UND MIT SOLCH EINEM LAUFRAD AUSGESTATTETES STRAHLTURBINENTRIEBWERK
FAN MODULE IMPELLER, AND JET TURBINE ENGINE EQUIPPED WITH SUCH AN IMPELLER

(30) Priorité: 23.06.2021 FR 2106662
(43) Date de publication de la demande: 01.05.2024
(73) Titulaire: SAFRAN AIRCRAFT ENGINES, 75015 Paris (FR)
(72) Inventeur: HUCHET, Sylvain, 77550 MOISSY-CRAMAYEL (FR); QUEANT, Didier, 77550 MOISSY-CRAMAYEL (FR)
(74) Mandataire: Cabinet Beau de Loménie
(86) Numéro de dépôt international: PCT/FR2022/051190
(87) Numéro de publication internationale: WO 2022/269180

(56) Documents cités:
- EP-A1- 3 798 418
- EP-A2- 2 674 577
- EP-A2- 2 706 240

## Description

### Domaine Technique

La présente invention concerne une roue de module fan (soufflante) de turboréacteur et, plus particulièrement, une roue de redresseur de sortie de module fan, et un turboréacteur équipé d'une telle roue. Une roue de redresseur de sortie de module fan est également connue par l'homme du métier par le terme anglais *Out*/*et Guide Vane* ou encore l'acronyme *OGV.* Une telle roue est fixe, et ne tourne donc pas autour de l'axe du turboréacteur contrairement à une roue de fan.

On notera que le terme « turboréacteur » désigne un appareil à turbine à gaz fournissant, par réaction à l'éjection à grande vitesse de gaz chauds, une poussée nécessaire à la propulsion.

### Technique antérieure

Les pales des roues de redresseur de sortie de module fan connus peuvent être en matériau composite à matrice organique renforcé en fibres. L'assemblage de telles pales avec le reste de la roue utilise généralement au moins un boulon directement pris dans une portion de la pale, par exemple le pied et/ou la tête de la pale, et n'est généralement pas optimisé en termes de tenue aux vibrations ou à l'impact. Par ailleurs, la formation de trous d'assemblage dans le matériau composite fragilise la pale avec des concentrations de contraintes locales parfois très nocives. Il existe donc un besoin en ce sens. Par ailleurs, un besoin similaire a également été constaté avec les pales de fan d'un module fan de turboréacteur. EP 3 798 418 A1 décrit une aube composite tissée de turbine à gaz et une méthode de fabrication d'une telle aube. EP 2 706 240 A2 décrit un ensemble d'aubes directrices. EP 2 674 577 A2 décrit un ensemble de fixation d'aube pour une turbomachine et turbomachine correspondante.

### Exposé de l'invention

Un aspect de l'invention concerne une roue de module fan de turboréacteur, présentant une direction axiale, une direction radiale et une direction circonférentielle, une face amont et une face aval, la roue comprenant une pluralité de pales en matériau composite à matrice organique renforcée en fibres, chaque pale présentant un pied assemblé avec un socle distinct des socles des autres pales, chaque socle présentant une rainure s'étendant axialement et débouchant du côté de la face amont et/ou du côté de la face aval, chaque pied coopérant par emboitement axial par complémentarité de formes, par exemple en formes de queue d'aronde, avec la rainure du socle, grâce à quoi le pied est retenu au socle selon les directions radiale et circonférentielle, et chaque socle coopère avec au moins une pièce configurée pour bloquer axialement le pied au sein de la rainure du socle, grâce à quoi le pied est retenu selon la direction axiale.

De manière générale, la direction axiale correspond à la direction de l'axe de de la roue de redresseur, et une direction radiale est une direction perpendiculaire à la direction axiale. La direction circonférentielle (ou azimutale) correspond à la direction décrivant un anneau autour de la direction axiale. Les trois directions axiale, radiale et circonférentielle correspondent respectivement aux directions définies par la côte, le rayon et l'angle dans un système de coordonnées cylindrique. En outre, l'amont et l'aval sont définis par rapport au sens d'écoulement normal du fluide (de l'amont vers l'aval) à travers la roue de redresseur (et plus généralement à travers le turboréacteur).

On comprend que chaque pale est assemblée avec un socle qui lui est propre. En d'autres termes, il y a autant de socles que de pales, chaque socle recevant une unique pale (distincte des pales des autres socles). Autrement dit, il y un socle par pale. Aussi, par la suite, et sauf indication contraire, la description visant tout ou partie du système d'assemblage d'une pale (par ex. une pale, un socle et au moins une pièce configurée pour bloquer axialement le pied) s'applique à tout ou partie, respectivement, de chacun des systèmes d'assemblage de toutes les autres pales.

Le pied et la rainure peuvent présenter toutes formes permettant un emboitement axial par complémentarité de forme, par exemple une forme de queue d'aronde, de trèfle, etc. La rainure peut être axialement débouchante uniquement du côté de la face amont (i.e. fermée axialement du côté de la face aval), uniquement du côté de la face aval (i.e. fermée axialement du côté de la face amont), ou bien débouchante axialement du côté de la face amont et du côté de la face aval. Cette dernière configuration présente l'avantage de faciliter l'assemblage du pied avec la rainure (plusieurs sens d'emmanchement étant possible.

Le socle peut coopérer avec une unique, deux, ou plus de deux pièce(s) configurée(s) pour bloquer axialement le pied au sein de la rainure du socle. Cette ou ces pièces peu(ven)t être propre(s) à chaque pale, ou bien être commune(s) à deux, plus de deux, ou toutes les pales.

Un tel système d'assemblage permet d'obtenir une meilleure tenue aux vibrations et une meilleure raideur en flexion. Par ailleurs, un tel assemblage ne comprend aucun perçage dans la pale, grâce à quoi on évite de la fragiliser. Ceci permet aussi de réduire la masse de l'ensemble en omettant les boulons de fixation de la pale de l'état de la technique. Le nombre réduit de pièces requises pour l'assemblage permet également de répondre à la contrainte de réduction de la masse. Par exemple, le système d'assemblage de chaque pale comprend uniquement trois éléments, à savoir la pale, le socle et une unique pièce configurée pour bloquer axialement le pied au sein de la rainure du socle.

Dans certains modes de réalisation, les pales sont à calage variable, chacun des socles étant monté sur une unique pièce, distincte des uniques pièces des autres socles, configurée pour bloquer axialement le pied au sein de la rainure du socle, chaque unique pièce étant configurée pour pivoter autour de la direction radiale.

On comprend que chaque socle coopère avec une unique pièce configurée pour bloquer axialement le pied au sein de la rainure, qui lui est propre. En d'autres termes, il y a autant d'uniques pièces que de socles, chaque unique pièce coopérant avec un unique socle (distinct des socles des autres uniques pièces). Autrement dit, il y a une pièce unique par socle. L'unique pièce permet d'une part de bloquer axialement le pied au sein de la rainure, et d'autre part de faire pivoter le socle, et donc la pale, autour de la direction radiale, grâce à quoi le calage (i.e. l'angle que forme une corde de la pale avec le flux d'air incident) de la pale est variable. L'unique pièce peut pivoter autour de la direction radiale par tout moyen connu par ailleurs par l'homme du métier.

Dans certains modes de réalisation, chaque unique pièce comprend une cavité recevant au moins une partie du socle, les parois de la cavité bouchant la rainure du côté de la face amont et du côté de la face aval.

L'unique pièce bloque donc le pied axialement au sein de la rainure dans les deux sens opposés, à savoir de l'amont vers l'aval et de l'aval vers l'amont.

Dans certains modes de réalisation, chaque socle comprend une bride s'étendant selon les directions axiale et circonférentielle, le socle étant fixé à l'unique pièce via la bride.

Par exemple, la bride est une bride annulaire s'étendant dans un plan défini par les directions axiale et circonférentielle. Par exemple, la bride présente des trous traversant s'étendant selon la direction radiale, par exemple des trous lamés, pour la fixation de la bride à l'aide de vis. Une telle structure permet de former une paroi aussi continue et lisse que possible, évitant ou limitant, en fonctionnement, la formation de trainée aérodynamique dans le flux d'air.

Dans certains modes de réalisation, les pales sont à calage fixe, chaque socle coopérant avec une pièce amont configurée pour bloquer axialement le pied au sein de la rainure du socle vers le côté de la face amont et une pièce aval configurée pour bloquer axialement le pied au sein de la rainure du socle vers le côté de la face aval.

La pièce amont permet de bloquer la pale selon la direction axiale, de l'aval vers l'amont. La pièce aval permet de bloquer la pale selon la direction axiale, de l'amont vers l'aval.

Par exemple, la pièce amont et la pièce aval peuvent être propres à chaque pale ou communes à plusieurs pales. Par exemple la pièce amont et la pièce aval peuvent être des portions de carter de la roue ou des brides du moyeu de la roue. Les pièces amont et aval peuvent être fixées au(x) socle(s), mais pas nécessairement. Les socles sont immobiles par rapport au reste de la roue, grâce à quoi les pales sont fixes (i.e. ne peuvent pas tourner autour d'une direction radiale).

Dans certains modes de réalisation, le pied de chaque pale et la rainure de chaque socle présentent la même longueur axiale.

Ceci permet d'assurer un contact immédiat entre le pied de chaque pale et la ou les pièces configurées pour bloquer axialement le pied au sein de la rainure du socle. On réduit ainsi le nombre de pièces requises et la masse tout en améliorant la tenue aux vibrations et la raideur en flexion.

Dans certains modes de réalisation, la roue de module fan de turboréacteur telle que brièvement exposée ci-dessus est une roue de redresseur de sortie de module fan de turboréacteur. Les pales de la roue de redresseur sont appelées pales redresseuses.

Dans certains modes de réalisation où la roue est une roue de redresseur de sortie de module fan de turboréacteur, les pales sont à calage fixe et chaque pale présente une tête assemblée avec un second socle distinct des seconds socles des autres pales, chaque second socle présentant une rainure s'étendant axialement et débouchant du côté de la face amont et/ou du côté de la face aval, chaque tête coopérant par emboitement axial par complémentarité de formes, par exemple en formes de queue d'aronde, avec la rainure du second socle, grâce à quoi la tête est retenue au second socle selon les directions radiale et circonférentielle, et chaque second socle coopère avec au moins une seconde pièce configurée pour bloquer axialement la tête au sein de la rainure du second socle, grâce à quoi la tête est retenue selon la direction axiale.

En d'autres termes, lorsque les pales sont à calage fixe, elles peuvent être maintenues en outre par la tête à l'aide d'un système similaire au système les maintenant par le pied. La rainure de chaque second socle peut être axialement débouchante uniquement du côté de la face amont (i.e. fermée axialement du côté de la face aval), uniquement du côté de la face aval (i.e. fermée axialement du côté de la face amont), ou bien débouchante axialement du côté de la face amont et du côté de la face aval. Cette dernière configuration présente l'avantage de faciliter l'assemblage de la tête avec la seconde rainure (plusieurs sens d'emmanchement étant possibles). Par exemple, la rainure du socle et la rainure du second socle peuvent être toutes les deux débouchantes d'un seul et même côté, mais pas nécessairement.

Dans certains modes de réalisation, chaque second socle coopère avec une seconde pièce amont configurée pour bloquer axialement la tête au sein de la rainure du second socle vers le côté de la face amont et une seconde pièce aval configurée pour bloquer axialement la tête au sein de la rainure du second socle vers le côté de la face aval.

La seconde pièce amont permet de bloquer la pale selon la direction axiale, de l'aval vers l'amont. La seconde pièce aval permet de bloquer la pale selon la direction axiale, de l'amont vers l'aval.

Par exemple, la seconde pièce amont et la seconde pièce aval peuvent être propres à chaque pale ou communes à plusieurs pales. Par exemple la seconde pièce amont et la seconde pièce aval peuvent être des portions de carter de la roue. Les secondes pièces amont et aval peuvent être fixées au(x) second(s) socle(s), mais pas nécessairement.

Dans certains modes de réalisation, la tête de chaque pale et la rainure de chaque second socle présentent la même longueur axiale.

Ceci permet d'assurer un contact immédiat entre la tête de chaque pale et la ou les secondes pièces configurées pour bloquer axialement la tête au sein de la rainure du second socle. On réduit ainsi le nombre de pièces requises et la masse tout en améliorant la tenue aux vibrations et la raideur en flexion.

Dans certains modes de réalisation, la roue de module fan de turboréacteur telle que brièvement exposée ci-dessus est une roue de fan de turboréacteur.

Un second aspect de l'invention concerne un turboréacteur comprenant une roue de module fan de turboréacteur selon l'un quelconque des modes de réalisation décrits dans le présent exposé.

### Brève description des dessins

L'objet du présent exposé et ses avantages seront mieux compris à la lecture de la description détaillée faite ci-après des aspects de l'invention et de différents modes de réalisation donnés à titre d'exemples non limitatifs. Cette description fait référence aux pages de figures annexées, sur lesquelles :
[Fig. 1] La figure 1 représente une vue en coupe partielle d'un turboréacteur,
[Fig. 2] La figure 2 représente une vue en éclaté d'un système d'assemblage d'une pale d'une roue de module fan du turboréacteur de la figure 1, pour le cas d'une pale à calage variable, et
[Fig. 3] La figure 3 représente une vue en éclaté du système d'assemblage d'une pale d'une roue de redresseur de sortie de module fan du turboréacteur de la figure 1, pour le cas d'une pale à calage fixe ;
[Fig. 4] La figure 4 représente une vue d'un autre système d'assemblage d'une pale d'une roue de redresseur de sortie de module fan du turboréacteur de la figure 1,
[Fig. 5] La figure 5 représente une vue en éclaté du système d'assemblage de la figure 4 ;
[Fig. 6] La figure 6 représente une vue partielle agrandie montrant la position d'une cale entre un pied de pale et la rainure d'un socle;
[Fig. 7] La figure 7 représente une forme de réalisation possible d'une cale pouvant être utilisée dans les systèmes des figures 2 à 6.

### Description des modes de réalisation

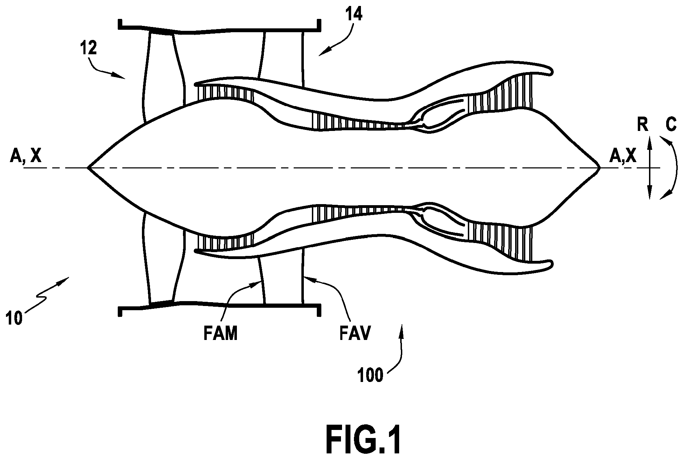

La figure 1 représente schématiquement un turboréacteur 100 comprenant un module fan 10. Dans cet exemple, le turboréacteur 100 est de type double corps, double flux, mais tout autre type de turboréacteur comprenant un module fan est envisageable.

Le module fan 10 présente un fan (ou soufflante) 12 et une roue de redresseur de sortie 14. Le fan 12 tourne autour de l'axe A tandis que la roue de redresseur 14 ne tourne pas autour de l'axe A. L'axe A correspond à l'axe du turboréacteur 100, qui est confondu avec l'axe du fan 12 et l'axe de la roue de redresseur 14, et définit la direction axiale X. La roue 14 présente une direction axiale X, une direction radiale R, une direction circonférentielle C, une face amont FAM et une face aval FAV.

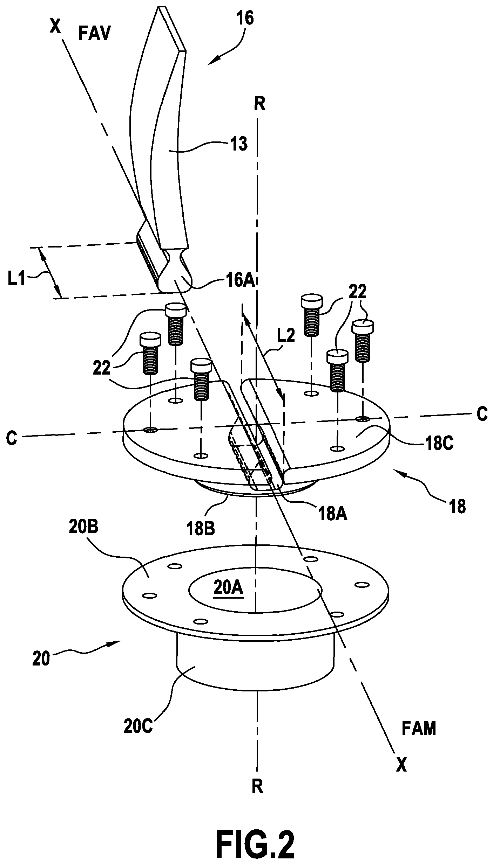

La figure 2 représente le système de montage d'une pale au sein d'un premier mode de réalisation de la roue de redresseur de sortie 14, au sein de laquelle les pales 16 sont à calage variable. On notera toutefois que le système de montage de pale de la figure 2 peut également s'appliquer aux pales de la roue du fan 12 de la figure 1. La figure 2 représente une seule pale 16 redresseuse, mais ce système est le même pour toutes les pales redresseuses 16 de la roue 14 selon le premier mode de réalisation. On note que le profil aérodynamique 13 de la pale 16 représenté sur la figure 2 est purement schématique, et ne correspond pas à un profil réel.

Les pales 16 sont en matériau composite à matrice organique renforcée en fibres, par exemple en fibres de carbone tissées suivant un tissage en trois dimensions. Chaque pale 16 présente un pied 16A assemblé avec un socle 18 distinct des socles des autres pales de la roue 14. Le socle 18 présente une rainure 18A s'étendant axialement et débouchant du côté de la face amont FAM et du côté de la face aval FAV. Le pied 16A coopère par emboitement axial par complémentarité de formes avec la rainure 18A du socle 18 (complémentarité entre la surface externe du pied 16A et la surface interne de la rainure 8A). Dans cet exemple, le pied 16A et la rainure 18A présentent une section transverse à la direction d'emboitement (i.e. à la direction axiale X) en forme de queue d'aronde (toutefois, d'autres formes complémentaires non représentées ici sont envisageables). Ceci permet la retenue du pied 16A au sein du socle 18 selon les directions radiale R et circonférentielle C. Dans cet exemple, le socle 18 coopère avec une unique pièce 20 configurée pour bloquer axialement le pied 16A au sein de la rainure 18A du socle 18. Ceci permet la retenue du pied 16A selon la direction axiale X au sein de la rainure 18A. En particulier, l'unique pièce 20 bloque le pied 16A dans le sens de la face amont FAM vers la face aval FAV et dans le sens de la face aval FAV vers la face amont FAM. L'unique pièce 20 (pièce pivot) est configurée pour pivoter autour de la direction radiale R, par tout moyen connu par ailleurs par l'homme du métier, grâce à quoi le calage de la pale est variable.

L'unique pièce 20 comprend une cavité 20A recevant au moins une partie 18B du socle 18, les parois de la pièce qui délimitent la cavité 20A bouchant la rainure 18A du côté de la face amont FAM et du côté de la face aval FAV. La longueur axiale L1 du pied 16A est égale à la longueur axiale L2 de la rainure 18A. On notera que le pied 16A de l'aube présente, à ses deux extrémités axiales opposées, deux faces dite amont et aval dont les surfaces sont conformées de manière à être complémentaires, localement, de la surface interne des parois de la pièce 20 qui définissent la cavité 20A, et notamment à l'endroit où ces parois obstruent axialement la rainure.

Plus particulièrement, dans cet exemple, la partie 18B du socle 18 présente une forme cylindrique d'axe parallèle à la direction radiale R, dans laquelle est ménagée la rainure 18A. La rainure 18A est débouchante et traverse de part en part, perpendiculairement à l'axe de la forme cylindrique, la partie 18B. La cavité 20A de l'unique pièce 20 présente également une forme cylindrique, ajustée à la partie 18B, de manière à pouvoir emmancher avec un minimum de jeu la partie 18B dans la cavité 20B. A titre d'exemple, les surfaces des deux faces amont et aval du pied 16A sont cylindriques (rayonnées) et ces surfaces cylindriques sont concentriques à la forme cylindrique de la cavité 20A de la pièce 20 et de même rayon. Le socle 18 présente en outre une bride annulaire ou collerette 18C s'étendant selon les directions axiale X et circonférentielle C, le socle 18 étant fixé à l'unique pièce 20 via cette bride 18C. La bride annulaire 18C est plus particulièrement séparée en deux parties par une fente centrale axiale située à l'aplomb de la rainure 18A et qui débouche dans celle-ci. Dans cet exemple, l'unique pièce 20 présente également une bride annulaire ou collerette 20B configurée pour coopérer avec la bride 18C. Par exemple, le socle 18 est fixé à l'unique pièce 20 à l'aide de vis 22. Par exemple, la cavité 20A est ménagée dans une portion cylindrique 20C d'axe parallèle à la direction radiale R.

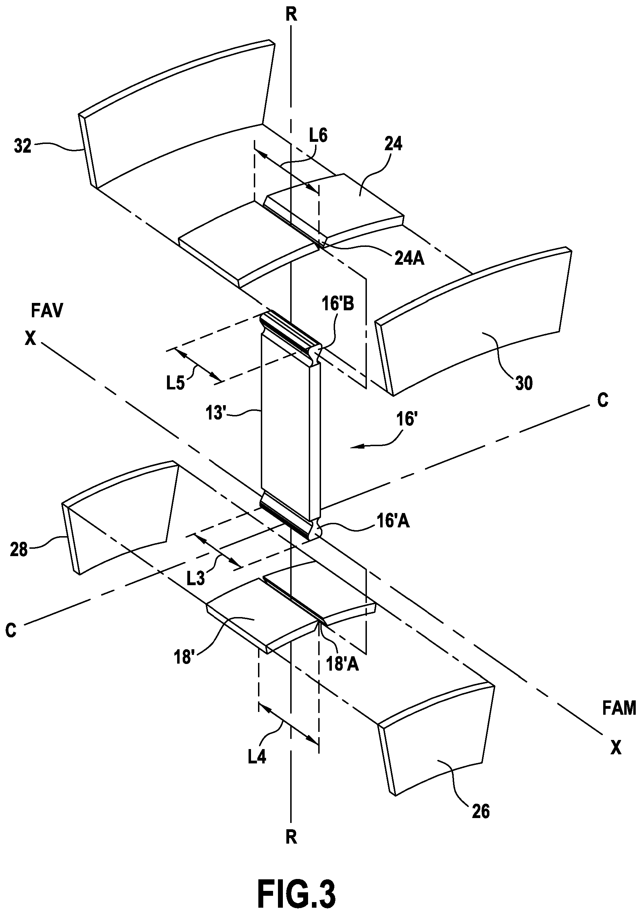

La figure 3 représente le système de montage d'une pale au sein d'un second mode de réalisation de la roue de redresseur de sortie 14, au sein de laquelle les pales 16' sont à calage fixe. La figure 3 représente une seule pale 16' redresseuse, mais ce système est le même pour toutes les pales redresseuses 16' de la roue 14 selon le second mode de réalisation. On note que le profil aérodynamique 13' de la pale 16' représenté sur la figure 3 est purement schématique, et ne correspond pas à un profil réel.

Les pales 16' sont en matériau composite à matrice organique renforcée en fibres. Chaque pale 16' présente un pied 16'A assemblé avec un socle (ou premier socle) 18' distinct des socles des autres pales de la roue 14 et une tête 16'B assemblée avec un second socle 24 distinct des seconds socles des autres pales de la roue 14.

Le socle 18' présente une rainure 18'A s'étendant axialement et débouchant du côté de la face amont FAM et du côté de la face aval FAV. Le pied 16'A coopère par emboitement axial par complémentarité de formes avec la rainure 18'A du socle 18'. Dans cet exemple, le pied 16'A et la rainure 18'A présentent une section transverse à la direction d'emboitement (i.e. à la direction axiale X) en forme de queue d'aronde (toutefois, d'autres formes complémentaires non représentées ici sont envisageables). Ceci permet la retenue du pied 16'A au sein du socle 18' selon les directions radiale R et circonférentielle C. La longueur axiale L3 du pied 16'A est égale à la longueur axiale L4 de la rainure 18'A. Par exemple, le socle 18' présente une forme sensiblement parallélépipédique, et peut être formé de deux pièces distinctes comme cela est représenté sur la figure 3, ou d'une seule et même pièce.

Dans cet exemple, le socle 18' coopère avec une pièce amont 26 configurée pour bloquer axialement le pied 16'A au sein de la rainure 18'A du socle 18' selon la direction axiale dans le sens orienté depuis la face aval FAV vers le côté de la face amont FAM. Le socle 18' coopère aussi avec une pièce aval 28 configurée pour bloquer axialement le pied 16'A au sein de la rainure 18'A du socle 18' selon la direction axiale dans le sens orienté depuis la face amont FAM vers le côté de la face aval FAV. Ceci permet la retenue du pied 16'A selon la direction axiale X au sein de la rainure 18'A. Dans cet exemple, la pièce amont 26 et la pièce aval 28 sont propres à la pale 16', i.e. il y a autant de pièce amont 26 et de seconde pièce aval 28 que de pales 16'. Dans cet exemple, la pièce amont 26 et la pièce aval 28 sont des portions de carter de la roue 14.

Le second socle 24 présente une rainure 24A s'étendant axialement et débouchant du côté de la face amont FAM et du côté de la face aval FAV. La tête 16'B coopère par emboitement axial par complémentarité de formes avec la rainure 24A du second socle 24. Dans cet exemple, la tête 16'B et la rainure 24A présentent une section transverse à la direction d'emboitement (i.e. direction axiale X) en forme de queue d'aronde. Ceci permet la retenue de la tête 16'B au sein du second socle 24 selon les directions radiale R et circonférentielle C. La longueur axiale L5 de la tête 16'B est égale à la longueur axiale L6 de la rainure 24A. Par exemple, le second socle 24 présente une forme sensiblement parallélépipédique, et peut être formé de deux pièces distinctes comme cela est représenté sur la figure 3, ou d'une seule et même pièce.

Dans cet exemple, le second socle 24 coopère avec une seconde pièce amont 30 configurée pour bloquer axialement la tête 16'B au sein de la rainure 24A du second socle 24 selon la direction axiale dans le sens orienté depuis la face aval FAV vers le côté de la face amont FAM. Le second socle 24 coopère aussi avec une seconde pièce aval 32 configurée pour bloquer axialement la tête 16'B au sein de la rainure 24A du socle 24 selon la direction axiale dans le sens orienté depuis la face amont FAM vers le côté de la face aval FAV. Ceci permet la retenue de la tête 16'B selon la direction axiale X au sein de la rainure 24A. Dans cet exemple, la seconde pièce amont 30 et la seconde pièce aval 32 sont propres à la pale 16', i.e. il y a autant de seconde pièce amont 30 et de seconde pièce aval 32 que de pales 16'. Dans cet exemple la seconde pièce amont 30 et la seconde pièce aval 32 sont des portions de carter de la roue 14.

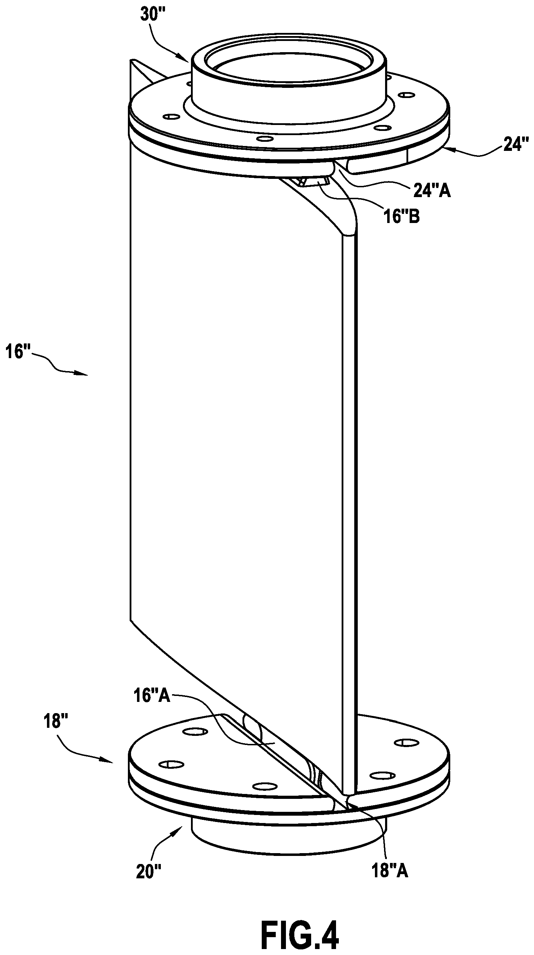

Les figures 4 à 6 illustrent un mode de réalisation qui reprend celui de la figure 2 et qui ajoute un blocage similaire pour la tête de la pale avec des éléments similaires ou identiques à ceux décrits pour le pied de la pale. Ainsi, sur la figure 4, le pied 16"A de la pale 16" est retenu radialement et circonférentiellement dans la rainure 18"A du socle 18" et le pied est bloqué axialement grâce à la pièce de blocage 20" (pièce pivot). De même, la tête 16"B de la pale 16" est retenue radialement et circonférentiellement dans la rainure 24"A du second socle 24" et le pied 16"B est bloqué axialement grâce à la seconde pièce de blocage 30" (pièce pivot).

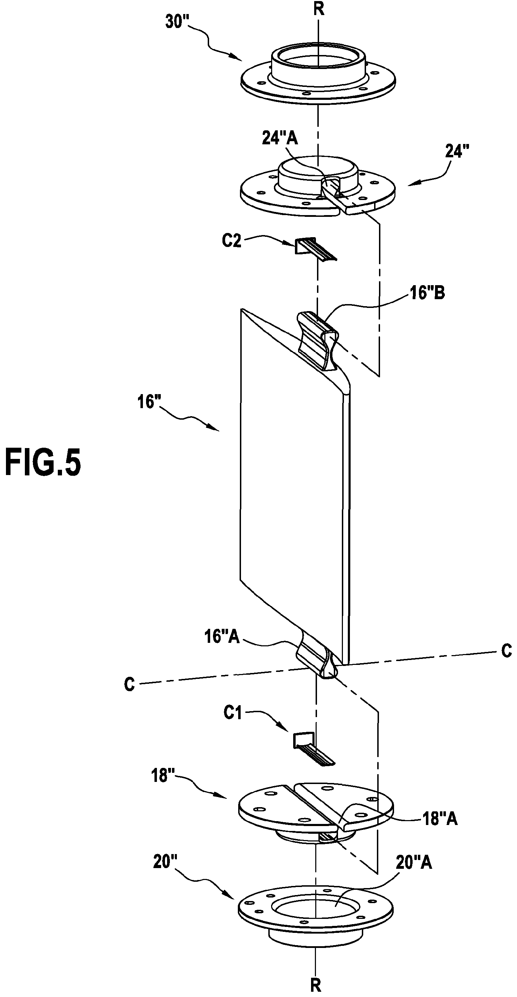

La figure 5 qui est une vue éclatée du système assemblé de la figure 4 montre les différents éléments constitutifs de ce système parmi lesquels deux cales (optionnelles) C1, C2 qui sont représentées chacune entre le fond de la rainure du socle correspondant 18" et 24" et le dessous ou fond du pied de pale ou le dessus de la tête de pale. Ces cales servent notamment à caler en position le pied de pale (tête de pale) dans la rainure axiale du socle, à faciliter le démontage et servent également de pièce d'usure. On notera que les pièces de blocage (pièces de pivot) illustrées sur les figures 4 et 5 ont été représentées avec un fond. Toutefois, dans une variante non représentée, un fond n'est pas nécessairement présent, ce qui permet de réduire le poids de la pièce et de l'ensemble intégrant cette pièce. Il en est de même pour la pièce 20 de la figure 2 qui peut avoir ou non un fond.

De manière générale, une cale peut venir s'insérer dans la rainure sous le fond du pied de pale, ceci afin de faciliter l'assemblage de la pale ave le socle et de maintenir une pression de contact constante entre le pied de pale et la rainure. Cette cale a de préférence une forme légèrement courbe (forme de « banane ») suivant son extension axiale (le long de son axe longitudinal) permettant d'exercer cette pression de contact une fois insérée dans la rainure (en raison de sa déformation élastique). La cale peut avoir une forme générale en L comme illustré sur la figure 5, pour venir en contact avec la cavité du socle (ex : 20"A) d'un seul côté de la rainure (sur la figure 5 la cale est courbée transversalement et non longitudinalement comme pour une forme de « banane » mais une telle courbure permet également un montage par mise en contrainte par déformation élastique).

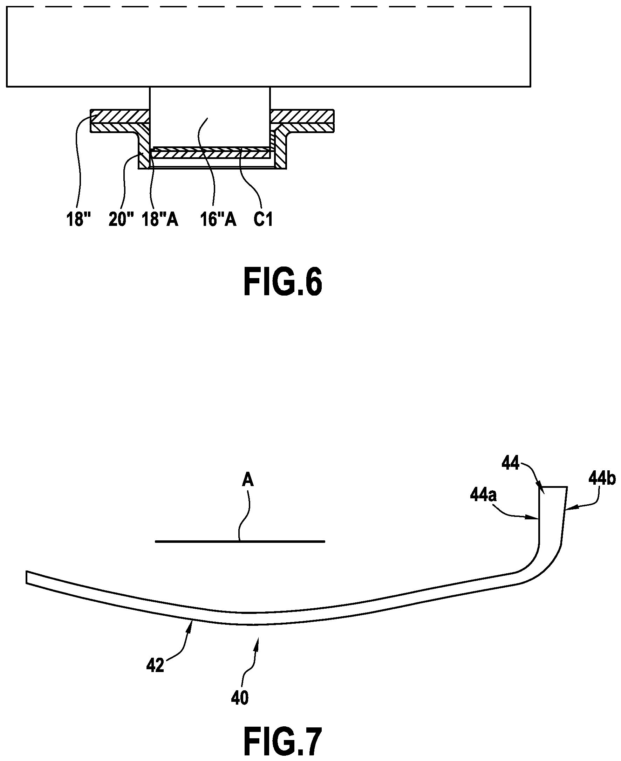

La figure 6 illustre, suivant une vue en coupe axiale le long de la rainure, la cale C1 en position interposée entre le pied de pale 16"A et la rainure 18"A du socle 18" emboîté dans la pièce de blocage axial 20". Grâce à ce montage, la cale exerce une pression axiale permettant de retenir le pied axialement. De plus, la cale exerce une pression radiale du pied sur la rainure permettant d'assurer une pression de matage entre ces pièces. Le même agencement s'applique également à la cale C2 de la figure 5. La cale peut avoir une forme générale courbée suivant sa longueur en forme de « banane », une forme générale courbée en tuile suivant sa direction transversale ou une forme en L rectiligne, voire une combinaison de plusieurs de ces formes.

La figure 7 illustre une forme de cale 40 combinant une première partie 42 de forme longitudinale incurvée en forme de « banane » et une deuxième partie 44 formant un retour sensiblement perpendiculaire à la première partie 42 et qui confère à l'ensemble une forme générale de L. On notera que le retour 44 a une première face 44a sensiblement perpendiculaire à la direction générale d'extension longitudinale A de la première partie 42 et une deuxième face opposée qui est convexe afin d'assurer la retenue axiale du pied de la pale (une pression de contact entre la cavité 20"A sur la figure 5 et le pied 16"A de la pale est ainsi assurée), tout en permettant le montage.

La description qui précède concernant les cales peut également s'appliquer au mode de réalisation des figures 2 et 3.

Bien que la présente invention ait été décrite en se référant à des modes de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Roue de module fan de turboréacteur (14), présentant une direction axiale (X), une direction radiale (R) et une direction circonférentielle (C), une face amont (FAM) et une face aval (FAV), la roue (14) comprenant une pluralité de pales (16, 16') en matériau composite à matrice organique renforcée en fibres, chaque pale (16, 16') présentant un pied (16A, 16'A), **caractérisée en ce que** le pied est assemblé avec un socle (18, 18') distinct des socles des autres pales, chaque socle (18, 18') présentant une rainure (18A, 18'A) s'étendant axialement et débouchant du côté de la face amont (FAM) et/ou du côté de la face aval (FAV), chaque pied (16A, 16'A) coopérant par emboitement axial par complémentarité de formes, par exemple en formes de queue d'aronde, avec la rainure (18A, 18'A) du socle (18, 18'), grâce à quoi le pied (16A, 16'A) est retenu au socle (18, 18') selon les directions radiale (R) et circonférentielle (C), et chaque socle (18, 18') coopère avec au moins une pièce (20 ; 26, 28) configurée pour bloquer axialement le pied (16A, 16'A) au sein de la rainure (18A, 18'A) du socle (18, 18'), grâce à quoi le pied (16A, 16'A) est retenu selon la direction axiale (X).

2. Roue de module fan de turboréacteur (14) selon la revendication 1, dans laquelle les pales (16) sont à calage variable, chacun des socles (18) étant monté sur une unique pièce (20), distincte des uniques pièces des autres socles, configurée pour bloquer axialement le pied (16A) au sein de la rainure (18A) du socle (18), chaque unique pièce (20) étant configurée pour pivoter autour de la direction radiale (R).

3. Roue de module fan de turboréacteur (14) selon la revendication 2, dans laquelle chaque unique pièce (20) comprend une cavité (20A) recevant au moins une partie (18B) du socle (18), les parois de la cavité (20A) bouchant la rainure (18A) du côté de la face amont (FAM) et du côté de la face aval (FAV), grâce à quoi le pied (16A) est retenu selon la direction axiale (X).

4. Roue de module fan de turboréacteur (14) selon la revendication 2 ou 3, dans laquelle chaque socle (18) comprend une bride (18C) s'étendant selon les directions axiale (X) et circonférentielle (C), le socle (18) étant fixé à l'unique pièce (20) via la bride (18C).

5. Roue de module fan de turboréacteur (14) selon la revendication 1, dans laquelle les pales (16') sont à calage fixe, chaque socle (18') coopérant avec une pièce amont (26) configurée pour bloquer axialement le pied (16'A) au sein de la rainure (18'A) du socle (18') vers le côté de la face amont (FAM) et une pièce aval (28) configurée pour bloquer axialement le pied (16'A) au sein de la rainure (18'A) du socle (18') vers le côté de la face aval (FAV).

6. Roue de module fan de turboréacteur (14) selon l'une quelconque des revendications 1 à 5, dans laquelle le pied (16A, 16'A) de chaque pale (16, 16') et la rainure (18A, 18'A) de chaque socle (18, 18') présentent la même longueur axiale (L1, L2 ; L3, L4).

7. Roue de module fan de turboréacteur (14) selon l'une selon l'une quelconque des revendications 1 à 6, dans laquelle la roue est une roue de redresseur de sortie de module fan de turboréacteur (14).

8. Roue de module fan de turboréacteur (14) selon les revendications 5 et 7, dans laquelle chaque pale (16') présente une tête (16'B) assemblée avec un second socle (24) distinct des seconds socles des autres pales, chaque second socle (24) présentant une rainure (24A) s'étendant axialement et débouchant du côté de la face amont (FAM) et/ou du côté de la face aval (FAV), chaque tête (16'B) coopérant par emboitement axial par complémentarité de formes, par exemple en formes de queue d'aronde, avec la rainure (24A) du second socle (24), grâce à quoi la tête (16'B) est retenue au second socle (24) selon les directions radiale (R) et circonférentielle (C), et chaque second socle (24) coopère avec au moins une seconde pièce (30, 32) configurée pour bloquer axialement la tête (16'B) au sein de la rainure (24A) du second socle (24), grâce à quoi la tête (16'B) est retenue selon la direction axiale (X).

9. Roue de module fan de turboréacteur (14) selon la revendication 8, dans laquelle chaque second socle (24) coopère avec une seconde pièce amont (30) configurée pour bloquer axialement la tête (16'B) au sein de la rainure (24A) du second socle (24) vers le côté de la face amont (FAM) et une seconde pièce aval (32) configurée pour bloquer axialement la tête (16'B) au sein de la rainure (24A) du second socle (24) vers le côté de la face aval (FAV).

10. Roue de module fan de turboréacteur (14) selon la revendication 8 ou 9, dans laquelle la tête (16'B) de chaque pale (16') et la rainure (24A) de chaque second socle (24) présentent la même longueur axiale (L5, L6).

11. Roue de module fan de turboréacteur (14) selon l'une selon l'une quelconque des revendications 1 à 6, dans laquelle la roue est une roue de fan de turboréacteur (14).

12. Turboréacteur (100) comprenant une roue de module fan de turboréacteur (14) selon l'une quelconque des revendications 1 à 11.

## Patentansprüche

1. Turbinenstrahltriebwerk-Fanmodul-Laufrad (14), das eine axiale Richtung (X), eine radiale Richtung (R) und eine Umfangsrichtung (C), eine stromaufwärtige Fläche (FAM) und eine stromabwärtige Fläche (FAV) aufweist, das Laufrad (14) umfassend eine Vielzahl von Schaufeln (16, 16') aus faserverstärktem Verbundmaterial mit organischer Matrix, wobei jede Schaufel (16, 16') einen Fuß (16A, 16'A) aufweist, **dadurch gekennzeichnet, dass** der Fuß mit einem Sockel (18, 18') zusammengebaut ist, der sich von den Sockeln der anderen Schaufeln unterscheidet, wobei jeder Sockel (18, 18') eine sich axial erstreckende Nut (18A, 18'A) aufweist, die auf der Seite der stromaufwärtigen Fläche (FAM) und/oder auf der Seite der stromabwärtigen Fläche (FAV) mündet, jeder Fuß (16A, 16'A) durch formschlüssiges axiales Ineinandergreifen, beispielsweise in Schwalbenschwanzformen, mit der Nut (18A, 18'A) des Sockels (18, 18') zusammenwirkt, wodurch der Fuß (16A, 16'A) in der radialen (R) und der Umfangsrichtung (C) an dem Sockel (18, 18') gehalten wird, und jeder Sockel (18, 18') mit mindestens einem Teil (20; 26, 28) zusammenwirkt, das konfiguriert ist, um den Fuß (16A, 16'A) innerhalb der Nut (18A, 18'A) des Sockels (18, 18') axial zu arretieren, wodurch der Fuß (16A, 16'A) in der axialen Richtung (X) gehalten wird.

2. Turbinenstrahltriebwerk-Fanmodul-Laufrad (14) nach Anspruch 1, wobei die Schaufeln (16) variabel verstellbar sind, jeder der Sockel (18) an einem einzigen Teil (20) montiert ist, das sich von den einzigen Teilen der anderen Sockel unterscheidet und konfiguriert ist, um den Fuß (16A) innerhalb der Nut (18A) des Sockels (18) axial zu arretieren, wobei jedes einzige Teil (20) konfiguriert ist, um um die radiale Richtung (R) zu schwenken.

3. Turbinenstrahltriebwerk-Fanmodul-Laufrad (14) nach Anspruch 2, wobei jedes einzelne Teil (20) einen Hohlraum (20A) umfasst, der mindestens einen Teil (18B) des Sockels (18) aufnimmt, die Wände des Hohlraums (20A) die Nut (18A) auf der stromaufwärtigen Fläche (FAM) und der stromabwärtigen Fläche (FAV) verschließen, wodurch der Fuß (16A) in der axialen Richtung (X) gehalten wird.

4. Turbinenstrahltriebwerk-Fanmodul-Laufrad (14) nach Anspruch 2 oder 3, wobei jeder Sockel (18) einen Flansch (18C) umfasst, der sich in der axialen (X) und der Umfangsrichtung (C) erstreckt, wobei der Sockel (18) über den Flansch (18C) an dem einzigen Teil (20) befestigt ist.

5. Turbinenstrahltriebwerk-Fanmodul-Laufrad (14) nach Anspruch 1, wobei die Schaufeln (16') mit fester Einstellung sind, wobei jeder Sockel (18') mit einem stromaufwärtigen Teil (26), das konfiguriert ist, um den Fuß (16'A) innerhalb der Nut (18'A) des Sockels (18') zur Seite der stromaufwärtigen Fläche (FAM) hin axial zu arretieren, und einem stromabwärtigen Teil (28), das konfiguriert ist, um den Fuß (16'A) innerhalb der Nut (18'A) des Sockels (18') zur Seite der stromabwärtigen Fläche (FAV) hin axial zu arretieren, zusammenwirkt.

6. Turbinenstrahltriebwerk-Fanmodul-Laufrad (14) nach einem der Ansprüche 1 bis 5, wobei der Fuß (16A, 16'A) von jeder Schaufel (16, 16') und die Nut (18A, 18'A) von jedem Sockel (18, 18') die gleiche axiale Länge (L1, L2; L3, L4) aufweisen.

7. Turbinenstrahltriebwerk-Fanmodul-Laufrad (14) nach einem der Ansprüche 1 bis 6, wobei das Laufrad ein Ausgangsgleichrichterrad eines Turbinenstrahltriebwerk-Fanmoduls (14) ist.

8. Turbinenstrahltriebwerk-Fanmodul-Laufrad (14) nach den Ansprüchen 5 und 7 wobei jede Schaufel (16') einen Kopf (16'B) aufweist, der mit einem zweiten Sockel (24) zusammengebaut ist, der sich von den zweiten Sockeln der anderen Schaufeln unterscheidet, jeder zweite Sockel (24) eine sich axial erstreckende Nut (24A) aufweist, die auf der Seite der stromaufwärtigen Fläche (FAM) und/oder auf der Seite der stromabwärtigen Fläche (FAV) mündet, wobei jeder Kopf (16'B) durch formschlüssiges axiales Ineinandergreifen, beispielsweise in Schwalbenschwanzformen, mit der Nut (24A) des zweiten Sockels (24) zusammenwirkt, wodurch der Kopf (16'B) in der radialen (R) und der Umfangsrichtung (C) an dem zweiten Sockel (24) gehalten wird, und jeder zweite Sockel (24) mit mindestens einem zweiten Teil (30, 32) zusammenwirkt, das konfiguriert ist, um den Kopf (16'B) innerhalb der Nut (24A) des zweiten Sockels (24) axial zu arretieren, wodurch der Kopf (16'B) entlang der axialen Richtung (X) gehalten wird.

9. Turbinenstrahltriebwerk-Fanmodul-Laufrad (14) nach Anspruch 8, wobei jeder zweite Sockel (24) mit einem zweiten stromaufwärtigen Teil (30), das konfiguriert ist, um den Kopf (16'B) innerhalb der Nut (24A) des zweiten Sockels (24) zu der Seite der stromaufwärtigen Fläche (FAM) hin axial zu arretieren, und einem zweiten stromabwärtigen Teil (32), das konfiguriert ist, um den Kopf (16'B) innerhalb der Nut (24A) des zweiten Sockels (24) zu der Seite der stromabwärtigen Fläche (FAV) hin axial zu arretieren, zusammenwirkt.

10. Turbinenstrahltriebwerk-Fanmodul-Laufrad (14) nach Anspruch 8 oder 9, wobei der Kopf (16'B) von jeder Schaufel (16') und die Nut (24A) von jedem zweiten Sockel (24) die gleiche axiale Länge (L5, L6) aufweisen.

11. Turbinenstrahltriebwerk-Fanmodul-Laufrad (14) nach einem der Ansprüche 1 bis 6, wobei das Laufrad ein Fan-Laufrad (14) eines Turbinenstrahltriebwerks ist.

12. Turbinenstrahltriebwerk (100), umfassend ein Turbinenstrahltriebwerk-Fanmodul-Laufrad (14) nach einem der Ansprüche 1 bis 11.

## Claims

1. A turbojet engine fan module wheel (14), having an axial direction (X), a radial direction (R) and a circumferential direction (C), an upstream face (FAM) and a downstream face (FAV), the wheel (14) comprising a plurality of blades (16, 16') made of fiber-reinforced organic-matrix composite material, each blade (16, 16') having a root (16A, 16'A), **characterized in that** the root is assembled with a base (18, 18') distinct from the bases of the other blades, each base (18, 18') having a groove (18A, 18'A) extending axially and opening out on the side of the upstream face (FAM) and/or on the side of the downstream face (FAV), each root (16A, 16'A) cooperating by axial interlocking in a form-fitting manner, for example in the shape of a dovetail, with the groove (18A, 18'A) of the base (18, 18'), whereby the root (16A, 16'A) is retained on the base (18, 18') along the radial (R) and circumferential (C) directions, and each base (18, 18') cooperates with at least one part (20; 26, 28) configured to axially block the root (16A, 16'A) within the groove (18A, 18'A) of the base (18, 18'), whereby the root (16A, 16'A) is retained along the axial direction (X).

2. The turbojet engine fan module wheel (14) according to claim 1, wherein the blades (16) are variable pitch blades, each of the bases (18) being mounted on a single part (20), distinct from the single parts of the other bases, configured to axially block the root (16A) within the groove (18A) of the base (18), each single part (20) being configured to pivot around the radial direction (R).

3. The turbojet engine fan module wheel (14) according to claim 2, wherein each single part (20) comprises a cavity (20A) receiving at least one piece (18B) of the base (18), the walls of the cavity (20A) clogging the groove (18A) on the side of the upstream face (FAM) and on the side of the downstream face (FAV), whereby the root (16A) is retained along the axial direction (X).

4. The turbojet engine fan module wheel (14) according to claim 2 or 3, wherein each base (18) comprises a flange (18C) extending along the axial (X) and circumferential (C) directions, the base (18) being fixed to the single part (20) via the flange (18C).

5. The turbojet engine fan module wheel (14) according to claim 1, wherein the blades (16') are fixed pitch blades, each base (18') cooperating with an upstream part (26) configured to axially block the root (16'A) within the groove (18'A) of the base (18') towards the side of the upstream face (FAM) and a downstream part (28) configured to axially block the root (16'A) within the groove (18'A) of the base (18') towards the side of the downstream face (FAV).

6. The turbojet engine fan module wheel (14) according to any one of claims 1 to 5, wherein the root (16A, 16'A) of each blade (16, 16') and the groove (18A, 18'A) of each base (18, 18') have the same axial length (L1, L2; L3, L4).

7. The turbojet engine fan module wheel (14) according to any one of claims 1 to 6, wherein the wheel is a turbojet engine fan module outlet rectifier wheel (14).

8. The turbojet engine fan module wheel (14) according to claims 5 and 7, wherein each blade (16') has a tip (16'B) assembled with a second base (24) distinct from the second bases of the others blades, each second base (24) having a groove (24A) extending axially and opening out on the side of the upstream face (FAM) and/or on the side of the downstream face (FAV), each tip (16'B) cooperating by axial interlocking in a form-fitting manner, for example in the shape of a dovetail, with the groove (24A) of the second base (24), whereby the tip (16'B) is retained on the second base (24) along the radial (R) and circumferential (C) directions, and each second base (24) cooperates with at least one second part (30, 32) configured to axially block the tip (16'B) within the groove (24A) of the second base (24), whereby the tip (16'B) is retained along the axial direction (X).

9. The turbojet engine fan module wheel (14) according to claim 8, wherein each second base (24) cooperates with a second upstream part (30) configured to axially block the tip (16'B) within the groove (24A) of the second base (24) towards the side of the upstream face (FAM) and a second downstream part (32) configured to axially block the tip (16'B) within the groove (24A) of the second base (24) towards the side of the downstream face (FAV).

10. The turbojet engine fan module wheel (14) according to claim 8 or 9, wherein the tip (16'B) of each blade (16') and the groove (24A) of each second base (24) have the same axial length (L5, L6).

11. The turbojet engine fan module wheel (14) according to any one of claims 1 to 6, wherein the wheel is a turbojet engine fan wheel (14).

12. A turbojet engine (100) comprising a turbojet engine fan module wheel (14) according to any one of claims 1 to 11.
